# FASCICULE DE BREVET EUROPEEN

(11) **EP 0 886 472 B1**
(45) Date de publication et mention de la délivrance du brevet: **06.03.2002**
(21) Numéro de dépôt: 96904989.9
(22) Date de dépôt: 21.03.1996
(51) Int. Cl.: A21D 2/02

(54) **PAIN**
BROT
BREAD

(43) Date de publication de la demande: 30.12.1998
(73) Titulaire: SCP High Tech Properties, Monaco 98000 (MC); Pouly, Aimé, 1205 Genève (CH)
(72) Inventeur: SCP High Tech Properties, Monaco 98000 (MC); Pouly, Aimé, 1205 Genève (CH)
(74) Mandataire: Moinas, Michel
(86) Numéro de dépôt international: IB9600247
(87) Numéro de publication internationale: WO9734493

(56) Documents cités:
- EP-A- 0 233 126
- EP-A- 0 338 875

## Description

La présente invention se rapporte à un pain, par exemple à un pain du type français destiné à être vendu frais au détail, notamment en boulangerie, dont la caractéristique essentielle est d'avoir un taux d'hydratation anormalement élevé tout en se présentant comme un pain traditionnel. Ce pain se distingue en outre par une excellente valeur nutritive, due en partie à un taux particulièrement bas en acide phytique et une haute teneur en vitamines et oligo-éléments.

La fabrication du pain est traditionnellement réalisée à partir de farine mi-blanche panifiable, par exemple celle connue sous le nom de type 55, mélangée à de l'eau pour faire une pâte, qui est additionnée de sel et de levure de boulangerie. Les pains dits "de spécialité" peuvent être préparés à partir de farines d'un autre type, par exemple type 65.

La pâte ainsi formée, relativement épaisse est alors pétrie, la fermentation se développant pendant une durée de six heures environ. Un pain traditionnel a un taux d'hydratation de l'ordre de 65 %.

Le "taux d'hydratation", terme consacré en boulangerie, est le rapport entre les quantités d'eau et de matières sèches présentes dans la pâte.

EP-A-0 233 126 décrit un pain naturel surhydraté fabriqué à partir d'une pâte hydratée à 80% en poids de farine.

EP-A-0 338 875 décrit un pain fabriqué à partir d'une pâte hydratée (pour 100 Kg de farine, de 75 à 80 Kg d'eau).

Tout autre est en revanche le pain selon l'invention et son procédé de fabrication.

Au contraire, le pain selon l'invention en effet est un pain à fermentation lente, ce qui permet une bonne élimination de l'acide phytique présent, au profit des acides lactiques et acétiques donnant au pain une bonne odeur et un goût noisette/blé écrasé. Par la fermentation très lente, on obtient une prédigestion de l'amidon, ce qui entraîne une activité suffisante pour neutraliser l'acide phytique, lequel fixe normalement les vitamines et oligo-éléments essentiels. Ce pain, par sa basse teneur en acide phytique, est donc riche en vitamines et oligo-éléments essentiels tels que le magnésium, le calcium, le fer et le phosphore, ainsi qu'en protéines.

Ce pain est caractérisé en ce que le taux d'hydratation de sa pâte avant fermentation est compris entre 85 et 95 %, que la quantité pondérale de levure dans la pâte est inférieure à 2,5 %, *qu'elle contient de la pâte préalablement fermentée, et en ce que la fermentation est d'une durée supérieure à 10 heures.

Avantageusement, le pétrissage de la pâte est effectué en deux étapes distinctes et séparées dont la durée totale est d'au moins 30 minutes, l'adjonction de sel à la pâte étant réalisé entre les deux étapes de pétrissage, et la température de la pâte reste inférieure à 25°C pendant tout le pétrissage.

Ainsi, une composition préférée de la pâte est la suivante, exprimée en parties pondérales :
- farine mi-blanche panifiable 100 parties
- eau 80 à 100 parties
- pâte fermentée (2/3 farine:1/3 eau) 12 à 20 parties
- sel 2 à 4 parties
- levure de boulangerie 0,1 à 0,4 partie
par exemple
- farine mi-blanche panifiable 100 kg
- eau 100 I, soit 100 kg
- pâte fermentée (2/3 farine, 1/3 eau) 30 kg
- sel 3 kg
- levure de boulangerie 100 g
correspondant en fait à 110 kg d'eau pour 120 kg de farine puisque la pâte fermentée apporte 10 kg d'eau pour 20 kg de farine, soit un taux d'hydratation de 90 % en chiffres arrondis.

Le pain selon l'invention peut être fabriqué en préparant une pâte par mélange de farine, d'eau et de levure, éventuellement de pâte fermentée. On pétrit cette pâte, puis on la sépare en unités individuelles de l'ordre de 5 à 15 kg, qu'on laisse reposer en sorte que la durée de fermentation totale soit au moins de 10 heures. Enfin on façonne la pâte à la main en y découpant des pâtons avant de procéder immédiatement à la cuisson sans permettre qu'une deuxième fermentation s'établisse. Dans un pain industriel classique, la pâte est laissée en blocs de 250kg environ, le façonnage est généralement effectué à la machine et la pâte subit une deuxième fermentation avant cuisson.

De préférence, on pétrit la pâte d'abord pendant une durée comprise entre 10 et 20 minutes, on ajoute le sel, on pétrit à nouveau la pâte pendant une durée comprise entre 20 et 45 minutes, les deux étapes de pétrissage étant conduites à une température n'excédent pas 25°C. Le deuxième pétrissage est avantageusement conduit à plus grande vitesse que le premier pétrissage.

Avantageusement aussi, la cuisson est conduite à une température comprise entre 230 et 260°C pendant une durée comprise entre 30 et 50 minutes, en enlevant la vapeur d'eau au tout début de la coloration de la pâte.

L'invention sera mieux comprise en relation avec l'exemple et le tableau comparatif ci-après, donnés à titre non limitatif.

### EXEMPLE

On prépare un pain à partir d'une pâte constituée de farine mi-blanche panifiable de type 55, sans acide ascorbique et bien reposée, au minimum pendant deux semaines. La pâte obtenue en ajoutant de l'eau froide, de préférence à une température inférieure à 10°C, est très liquide comparativement à une pâte à pain traditionnelle; on y ajoute de la pâte fermentée, soit d'une fabrication traditionnelle, soit d'une fabrication précédente selon l'invention.

Mentionnons que cette pâte fermentée a été conservée à 5°C pendant un minimum de 12 heures.

On pétrit alors la pâte de départ, en veillant à ce que la température n'excède pas 25°C maximum dans un pétrin, par exemple un pétrin spirale pendant 15 minutes environ à première vitesse (70 tours/minute), puis on ajoute le sel et on continue le pétrissage, toujours à 25°C maximum, dans le même pétrin en deuxième vitesse (140 tours/minute).

L'adjonction de sel entre les deux étapes de pétrissage et non à la fin, est un facteur important qui permet d'éviter l'oxydation et le blanchiment de la pâte, ce qui entraînerait un lessivage des oligo-éléments, compte tenu de la durée de pétrissage anormalement longue.

A la fin du pétrissage, on répartit la pâte dans des bacs bien farinés par lots de 10kg, ce qui permet d'éviter un échauffement de cette pâte si elle était maintenue, compte tenu ici de la durée de fermentation anormalement longue, dans un grand volume. L'échauffement de la pâte entraînerait le développement d'une acidité qui empêcherait les arômes de se développer.

On entrepose la pâte pendant 10 à 24 heures de façon à laisser se développer la fermentation, qui n'est que de l'ordre de 2 à 6 heures dans une fabrication traditionnelle. On peut rabattre la pâte une fois pour l'oxygéner.

La pâte, qui était très liquide à la fin du pétrissage, est devenue, après cette longue fermentation, très douce, homogène, très souple et ne colle plus.

On retourne alors délicatement les lots de 10kg sur une table bien farinée pour former pour chaque lot un grand rectangle dans lequel on découpe par exemple 20 baguettes de 500g, qu'on torsade légèrement en les roulant dans la farine et qu'on dépose sur les tapis à enfourner. On façonne à la main, sans retravailler la pâte, et non à la machine comme cela est fréquent dans une fabrication traditionnelle.

L'enfournage est immédiat, sans attendre la deuxième fermentation, dans un four à une température comprise entre 250°C et 260°C avec vapeur, qu'on enlève au début de la coloration pour obtenir un pain à croûte croustillante. Le temps de cuisson est d'environ 40 minutes.

Mentionnons que dans une fabrication traditionnelle, l'enfournage a lieu à l'issue d'une deuxième fermentation de l'ordre de 1,5 à 2 heures.

L'invention sera mieux comprise en référence au tableau ci-dessous, dans lequel sont reportés dans un tableau, à titre comparatif, les principaux paramètres et éléments de fabrication du pain selon l'invention, en comparaison avec un pain traditionnel :

**TABLEAU**

| | **Pain selon l'invention (exemple)** | **Pain traditionnel (exemple)** |
|---|---|---|
| Tx d'hydratation | 90%, soit 100kg farine/100I eau 30kg pâte fermentée | 65%, soit 150kg farine/100I eau |
| % levure | 1% | 15 à 20 % |
| Nature de la pâte | très liquide | épaisse |
| Pétrissage | en deux étapes durée 15 min., puis 30 min. | en deux étapes durée 5 min., puis 7 min. |
| Adjonction sel | entre les deux étapes de pétrissage | en fin de de pétrissage |
| Fermentation | 12 à 24h | 2 à 6h |
| Façonnage | à la main, sans retravailler | à la main ou à la machine |
| Cuisson | immédiate, sans deuxième fermentation | après repos de 1,5 à 2h 1,5 à 2h permettant la deuxième fermentation |

Le pain selon l'invention se distingue par un croustillant et une flaveur remarquables, qui résultent de l'élaboration et, après une longue fermentation, de la cuisson d'une pâte de composition simple, simplicité qui est à la base de sa qualité et de sa finesse. Il présente une teinte souvent orangée discrètement associée au brun clair de sa croûte, si désiré un aspect torsadé , une couleur blanc-crème naturelle noble et alvéolée de la mie, un taux d'hydratation très élevé et des cavités qui en font un pain appétissant et très apprécié.

Il est aisément reconnaissable à ses alvéoles ovales ou oblongues couchées dans le sens du pain, alors qu'un pain traditionnel a plutôt des alvéoles rondes.

Les qualités gustatives du pain selon l'invention sont exceptionnelles, de même que ses qualités nutritives ou nutritionnelles, par suite de son bas taux en acide phytique permettant une haute teneur en vitamines et oligo-éléments.

Son taux d'hydratation, de l'ordre de 85 à 95%, fait exception dans les règles de la panification et sa fermentation particulièrement longue assure, avec sa très grande hydratation, une conservation prolongée, but recherché aujourd'hui par les consommateurs.

Passé au grille-pain, le pain selon l'invention garde une qualité exceptionnelle. Mentionnons que cette qualité est obtenue en l'absence de levure, de sucre, de flocons de pomme-de.terre ou d'agents de conservation, qui sont hélas trop souvent la loi des pains industriels traditionnels.

Avantage déterminant, le fort taux d'hydratation du pain réduit son coût de fabrication, ce qui permet de produire, à qualité égale, voire supérieure, des pains meilleur marché, ou d'augmenter les marges du boulanger, à prix de vente égal.

Autre avantage pour le boulanger, il n'est pas nécessaire de travailler la nuit puisque, par suite de la durée de fermentation, la même pâte peut être utilisée de 6h du matin à 6h du soir. De plus, le processus sans deuxième fermentation permet d'obtenir en une heure et à n'importe quel moment de la journée, une fournée supplémentaire de qualité irréprochable.

## Revendications

1. Pain, dont la pâte est à base de farine, d'eau, de sel et de levure, caractérisé en le taux d'hydratation de sa pâte avant fermentation est compris entre 85 et 95 %, que la quantité pondérale de levure dans la pâte est inférieure à 2,5 %, qu'elle contient de la pâte préalablement fermentée, et en ce que la fermentation est d'une durée supérieure à 10 heures.

2. Pain selon la revendication 1, **caractérisée en ce que** le pétrissage de la pâte est effectué en deux étapes distinctes et séparées dont la durée totale est d'au moins 30 minutes, l'adjonction de sel à la pâte étant réalisé entre les deux étapes de pétrissage.

3. Pain selon la revendication 1 ou 2, **caractérisée en ce que** la température de la pâte reste inférieure à 25°c pendant toute la fermentation.

4. Pain selon l'une des revendications 1 à 3, caractérisé en ce sa pâte a la composition suivante, exprimée en parties pondérales :
- farine mi-blanche panifiable 100 parties
- eau 80 à 100 parties
- pâte fermentée (2/3 farine, 1/3 eau) 12 à 20 parties
- sel 2 à 4 parties
- levure de boulangerie 0,1 à 0,4 partie

5. Pain selon l'une des revendications précédentes, **caractérisé en ce qu'**il a une forme torsadée.

6. Pain selon l'une des revendications précédentes, **caractérisé par** une haute valeur gustative et une haute valeur nutritive.

7. Procédé de fabrication du pain selon l'une quelconque des revendications 1 à 6, **caractérisé en ce qu'**on prépare une pâte en mélangeant de la farine, de l'eau et de la levure, éventuellement de la pâte fermentée, qu'on pétrit celle-ci, puis qu'on sépare la pâte en unités individuelles de l'ordre de 5 à 15 kg, qu'on laisse reposer en sorte que la durée de fermentation totale soit au moins de 10 heures, et qu'enfin on façonne la pâte à la main en y découpant des pâtons avant de procéder immédiatement à la cuisson sans permettre une deuxième fermentation.

8. Procédé de fabrication du pain selon la revendication 7, **caractérisé en ce qu'**on pétrit la pâte d'abord pendant une durée comprise entre 10 et 20 minutes, qu'on ajoute alors le sel, qu'on pétrit à nouveau la pâte pendant une durée comprise entre 20 et 45 minutes, les deux étapes de pétrissage étant conduites à une température n'excédent pas 25°C.

9. Procédé de fabrication du pain selon la revendication 8, **caractérisé en ce que** le deuxième pétrissage est conduit à plus grande vitesse que le premier pétrissage.

10. Procédé de fabrication du pain selon l'une des revendications 7 à 9, **caractérisé en ce que** la cuisson est conduite à une température comprise entre 230 et 260°C pendant une durée comprise entre 30 et 50 minutes, en enlevant la vapeur d'eau au tout début de la coloration de la pâte.

## Claims

1. Bread, the dough of which is based on flour, water, salt and yeast, **characterised in that** the rate of hydration of its dough before fermentation is between 85 and 95%, **in that** the quantity by weight of yeast in the dough is less than 2.5%, **in that** it contains yeast which has been fermented in advance and **in that** fermentation lasts more than 10 hours.

2. Bread according to claim 1, **characterised in that** the dough is kneaded in two distinct and separate stages, the total duration of which is at least 30 minutes, salt being added to the dough between the two kneading stages.

3. Bread according to claim 1 or 2, **characterised in that** the temperature of the dough remains less than 25°C during the entire fermentation.

4. Bread according to any one of claims 1 to 3, **characterised in that** its dough has the following composition, expressed in weight parts:
- semi-white bread flour 100 parts
- water 80 to 100 parts
- fermented yeast (2/3 flour, 1/3 water) 12 to 20 parts
- salt 2 to 4 parts
- baker's yeast 0.1 to 0.4 part

5. Bread according to any one of the preceding claims, **characterised in that** it has a twisted shape.

6. Bread according to any one of the preceding claims, **characterised by** a high gustative value and a high nutritional value.

7. Process for making bread according to any one of claims 1 to 6, **characterised in that** a dough is prepared by mixing flour, water and yeast, possibly fermented yeast, **in that** this is kneaded, and that the dough is then separated into individual units of 5 to 15 kg which are allowed to rest such that the total fermentation time is at least 10 hours and **in that** the dough is finally shaped by hand by cutting lumps therefrom before immediately proceeding to baking without allowing a second fermentation.

8. Process for making bread according to claim 7, **characterised in that** the dough is first kneaded for between 10 and 20 minutes, **in that** the salt is then added, **in that** the dough is then kneaded again for between 20 and 45 minutes, the two kneading stages being carried out at a temperature not exceeding 25°C.

9. Process for making bread according to claim 8, **characterised in that** the second kneading is carried out faster than the first kneading.

10. Process for making bread according to any one of claims 7 to 9, **characterised in that** baking is carried out at a temperature between 230 and 260°C for a time between 30 and 50 minutes, while removing the water vapour at the very start of colouration of the dough.

## Patentansprüche

1. Brot, dessen Teig auf Mehl, Wasser, Kochsalz und Hefe basiert, **dadurch gekennzeichnet, dass** der Hydratationsgrad seines Teiges vor der Gärung zwischen 85 und 95 % liegt, dass die Gewichtsmenge an Hefe im Teig geringer als 2,5 % ist, dass es im voraus fermentierten Teig enthält und dass die Gärung eine Dauer von mehr als 10 Stunden hat.

2. Brot nach Anspruch 1, **dadurch gekennzeichnet, dass** das Kneten des Teiges in zwei verschiedenen, getrennten Schritten erfolgt, deren Gesamtdauer mindestens 30 Minuten beträgt, wobei die Zugabe des Kochsalzes zum Teig zwischen den beiden Knetschritten erfolgt.

3. Brot nach Anspruch 1 oder 2, **dadurch gekennzeichnet, dass** die Temperatur des Teiges während der gesamten Gärung unterhalb von 25 °C bleibt.

4. Brot nach einem der Ansprüche 1 bis 3, **dadurch gekennzeichnet, dass** sein Teig die folgende, in Gewichtsteilen ausgedrückte Zusammensetzung hat:
- halbweisses Brotmehl 100 Teile
- Wasser 80 bis 100 Teile
- fermentierter Teig (2/3 Mehl, 1/3 Wasser) 12 bis 20 Teile
- Kochsalz 2 bis 4 Teile
- Bäckerhefe 0,1 bis 0,4 Teile

5. Brot nach einem der voraufgehenden Ansprüche, **dadurch gekennzeichnet, dass** es eine Zopfform hat.

6. Brot nach einem der voraufgehenden Ansprüche, **gekennzeichnet durch** einen hohen Geschmackswert und einen hohen Nährwert.

7. Herstellungsverfahren für Brot nach einem beliebigen der Ansprüche 1 bis 6, **dadurch gekennzeichnet, dass** man durch Vermischen von Mehl, Wasser und Hefe und eventuell fermentiertem Teig einen Teig bereitet, diesen knetet, dann den Teig in einzelne Stücke in der Grösse von 5 bis 15 kg auftrennt, ihn ruhen lässt, so dass die Gesamtdauer der Gärung mindestens 10 Stunden beträgt, und dass man schliesslich den Teig von Hand formt, indem man Teigstücke abschneidet, und dann unmittelbar zum Backen übergeht, ohne eine zweite Gärung zuzulassen.

8. Herstellungsverfahren für Brot nach Anspruch 7, **dadurch gekennzeichnet**, das man den Teig zuerst während einer Zeitdauer zwischen 10 und 20 Minuten knetet, dass man dann das Kochsalz zugibt, dass man den Teig erneut während einer Zeitdauer zwischen 20 und 45 Minuten knetet, wobei die beiden Knetschritte bei einer Temperatur ausgeführt werden, die 25 °C nicht überschreitet.

9. Herstellungsverfahren fiir Brot nach Anspruch 8, **dadurch gekennzeichnet, dass** das zweite Kneten mit höherer Geschwindigkeit als das erste Kneten ausgeführt wird.

10. Herstellungsverfahren für Brot nach einem der Ansprüche 7 bis 9, **dadurch gekennzeichnet, dass** das Backen während einer Zeitdauer zwischen 30 und 50 Minuten bei einer Temperatur zwischen 230 und 260 °C durchgeführt wird, wobei der Wasserdampf bei der ersten Färbung des Teigs entzogen wird.
